# EUROPEAN PATENT APPLICATION

(11) **EP 2 808 618 A2**
(43) Date of publication of application: **03.12.2014**
(21) Application number: 14382200.5
(22) Date of filing: 29.05.2014
(51) Int. Cl.: F24J 2/46

(54) **Solar panel**

(30) Priority: 29.05.2013 ES 201330790
(71) Applicant: Lasierra Toldra, Antoni, 08401 Granollers (Barcelona) (ES); Retana Pendon, Alberto Miguel, 08401 Granollers (Barcelona) (ES)
(72) Inventor: Retana Pendon, Alberto Miguel, 08401 GRANOLLERS (BARCELONA) (ES)
(74) Representative: Durán-Corretjer, S.L.P.

(57) **Abstract**

Solar panel (1) of the type that has a main body consisting of a perimeter frame (17) which defines an internal volume in which a collecting surface (19) is situated adjacent to a heat transfer fluid circuit in an area exposed to sunlight, said circuit comprising at least one inlet (91) of the solar panel (1) and at least one outlet (92) of the solar panel (1) for the heat transfer fluid, characterised in that the solar panel (1) comprises an inlet and an outlet in its inner casing for receiving a recirculation pipe (14) for the heat transfer fluid.

## Description

The present invention relates to solar panels for obtaining energy from the sun by thermal means. More particularly, the present invention relates to the elements of the solar panels that form the heat transfer fluid circuit.

In conventional solar thermal systems for heating a fluid by forced convection, there is a primary circuit where a heat transfer fluid is heated by means of a solar panel, said fluid in turn circulating through an element which transfers the calorific energy, usually to an accumulator, where the fluid to be heated is disposed at a lower temperature.

The behaviour of a fluid when passing inside piping produces a loss of pressure. If the circuit is a set of pipes arranged with different lengths, as is the case for a conventional solar panel or array of solar panels in the prior art, there is an unequal distribution of the volume of water circulating in each of said pipes, and the shorter the travel and the fewer changes of direction (elbows, T couplings, radii, etc.), the greater the volume of water whereas the greater the travel and changes in direction in the path of the fluid between the fluid inlet and outlet, the smaller the volume of water. Therefore to cause the same volume of water to circulate through each of the different circuits, it is advisable to compensate for losses of load. This is achieved with balancing valves or by ensuring that the travel of the fluid with changes of direction (elbows, reducers, etc.) along all possible paths throughout the circuit of the system is exactly the same.

To achieve this object, it is known to send the heat transfer fluid through one end of the solar panel or array of solar panels and to cause it to return through the opposite end thereof, requiring a path to be produced outside the solar panel for sending or returning the heat transfer fluid to the heat exchanger.

Document US2010288264A discloses a fence or enclosure, which comprises solar panels and an auxiliary return line located inside the fence but outside the space for the solar panels. Said line is covered with insulating material. Said auxiliary line is equivalent to the return or auxiliary lines that run, having been insulated, outside the solar panels.

An object of the present invention is to provide a solution to said problems of the prior art. To achieve this, the invention relates to the sending or return of the heat transfer fluid without travelling outside the solar collector or with a smaller amount of travel outside the solar collector and is based on a solar panel inside which one or all of the elements of the circuit for recirculating the heat transfer fluid are arranged, so that the elements used to conduct the heat transfer fluid outside the solar collector are completely or partly eliminated. The effect thus produced not only reduces additional heating of the heat transfer fluid but also firstly eliminates a large number of components such as pipes, elbowed couplings, flanges, absorption, expansion and insulation elements, and the accessories thereof and secondly, and yet more importantly, it eliminates much of the work force involved in fitting the recirculation pipes to the connection and insulation elements thereof (the maximum reduction being achieved if said elements are welded together) as well as the insulation elements and the attachment thereof.

More particularly, the present invention comprises a solar panel of the type that has a main body consisting of a perimeter frame which defines an internal volume in which a collecting surface is situated adjacent to a heat transfer fluid circuit in an area exposed to sunlight, said circuit comprising at least one inlet and one outlet of the solar panel for the heat transfer fluid. In its inner casing, the solar panel comprises an inlet and an outlet for receiving a recirculation pipe for the heat transfer fluid. Preferably, said circuit further comprises a recirculation pipe that also has an inlet and an outlet for the heat transfer fluid from the outside.

The collecting surface and the circuit may be adjacent, in contact or interconnected totally or partly, without departing from the spirit of the invention.

Another factor to take into account is that the efficiency of the entire installation is increased, because the insulation inside the collecting surface (usually 40 to 60 mm) is normally much thicker than the pipe insulators (normally 20-25 mm). The only additional accessory compared with a conventional collector with no recirculation is one more connection element between the collectors, increasing the number of connection elements for each solar panel added to a group of solar panels from two to three.

Another factor to take into account is that all the elements inside the collector are protected from adverse atmospheric conditions, such as oxidation, galvanic corrosion, cracking, contact with acids, dirt, etc.

As mentioned above, partial incorporation is possible, by incorporating only the fluid recirculation pipe, which may be a sending (preferred) or return pipe and the supply or return pipe respectively plus the double connection elbow for recirculation outside the solar panel. In this case, the configuration of the solar panel is always the same and two external connection accessories are necessary.

However, total incorporation of the components inside the collector is also possible. In this case, the present invention provides for three possible preferred configurations:
a) If the array of solar panels has three or more solar panels, three solar panel configurations are necessary: the initial one (through which the heat transfer fluid enters and leaves), the intermediate one (for circulation between the initial and final solar panels) and the final solar panel of the installation (where the return of the fluid to the initial solar panel begins).
b) If the solar panel array has two solar panels, the initial and final configuration will be sufficient, without the intermediate model.
c) If the solar panel array has only one solar panel, it would not need a configuration that incorporates the initial and final solar panel.

Using the sending pipe for recirculation is considered preferable as the heat transfer fluid is colder than in the return pipe, and because the recirculation pipe has less contact with the collecting surface than in the rest of the heat absorber it has less effect on its efficiency. Furthermore, it enables better incorporation of other elements such as sensors or steam separators.

More particularly, the present invention consists of a solar panel, of the type that has a main body consisting of a perimeter frame which defines an internal volume in which a collecting surface is situated connected to a heat transfer fluid circuit in an area exposed to sunlight, said circuit comprising at least one solar panel inlet and one solar panel outlet for the heat transfer fluid, characterised in that the circuit further comprises a recirculation pipe that also has an inlet and an outlet for the heat transfer fluid from the outside.

More preferably, the solar panel is characterised in that said circuit consists of a first collector pipe and a second collector pipe which are parallel and a pipe or series of pipes that connect both the first and second collector pipes, the first collector pipe having at least said inlet for the heat transfer fluid to the circuit and the second collector pipe having at least said outlet for the heat transfer fluid to the circuit.

In a preferred embodiment, the solar panel is characterised in that both the first pipe and the second pipe each have an inlet as well as an outlet for the heat transfer fluid from the outside.

In another preferred embodiment, there is a direct fluid connection between the first collector pipe and the pipe.

In another more preferred embodiment, the first or second collector pipe has a stopper.

The present invention also comprises installations comprising solar panels according to the present invention which are interconnected. In particular, the present invention includes an installation characterised in that it comprises at least two solar panels, the solar collectors of said two panels being interconnected and the recirculation pipes of said two panels being connected to each other.

For a better understanding, the accompanying drawings show an embodiment of the solar panel according to the present invention by way of an explanatory but not limiting example.
Fig. 1 shows diagrammatically a solar panel according to the present invention, to which accessories have been added to configure an installation.
Fig. 2 shows diagrammatically an embodiment with partial incorporation of an array of three solar panels according to the present invention.
Fig. 3 shows diagrammatically a second embodiment with total incorporation of an array of three solar panels in parallel according to the present invention.
Fig. 4 shows diagrammatically a third embodiment with three solar panels connected in series.

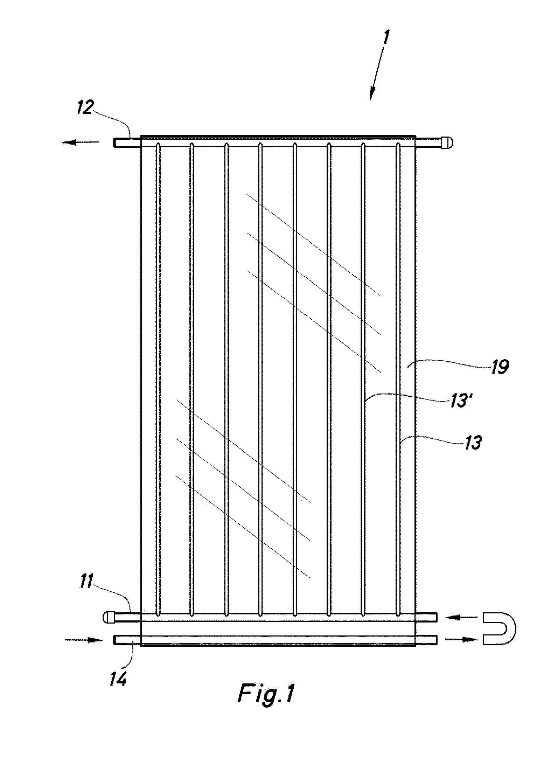

Fig. 1 shows diagrammatically a solar panel -1-illustrating only the collecting surface -19-, which is generally rectangular in shape, and the pipes forming the circuit for the heat transfer fluid (usually water). It can be seen that said circuit comprises a first collector pipe-11-and a second collector pipe -12-, which in this case are parallel. Between the two collector pipes -11-, -12-, a plurality of pipes -13-, -13'- are arranged which in this case are parallel and connect the two collector pipes -11-, -12-. This provides the heat transfer fluid with as many routes to choose as there are parallel pipes -13-, -13'-, but the length to be travelled, the equivalent pipe diameter and the number of turns are identical for all the pipes.

Although it is sufficient for the invention that each of the collector pipes -11-, -12- has an inlet/outlet for the heat transfer fluid, it is advantageous for forming arrays of solar panels for each of the collector pipes -11-, -12-to have an inlet and an outlet for the heat transfer fluid. Said inlets and outlets of the collector pipes -11-, -12- are also inlets/outlets for the solar panel -1-.

Furthermore, and characteristically, the solar panel -1-has an additional recirculation pipe -14- which has an inlet and an outlet for the heat transfer fluid. This additional recirculation pipe -14- is the pipe used to return the fluid from the end of the installation to the point of origin. Alternatively, it can also be used to take the heat transfer fluid to the most distant point of the installation before said fluid circulates through the collector pipes -11-, -12- and the parallel pipes -13-, -13'-. As can be seen in the drawings, in this embodiment the additional recirculation pipe -14- is actually situated in the same space as the rest of the heat transfer fluid circuit.

To produce an installation, starting with a single solar panel -1-, the outlet (the right end) of the second collector pipe -12- and the inlet (the end on the left in Fig. 1) of the first collector pipe -11- can simply be plugged by a cap. In addition, the outlet (the right end) of the first collector pipe -11- is connected by a double elbow to the outlet (the right end) of the recirculation pipe -14-. These operations can be performed using accessories outside the solar panel. The heat transfer fluid then enters at the left end of the recirculation pipe -14-and leaves, now hot, at the left end of the second collector pipe -12-. Other configurations are possible. It is also possible to arrange the caps and the elbow described above inside the solar panel and market it like this.

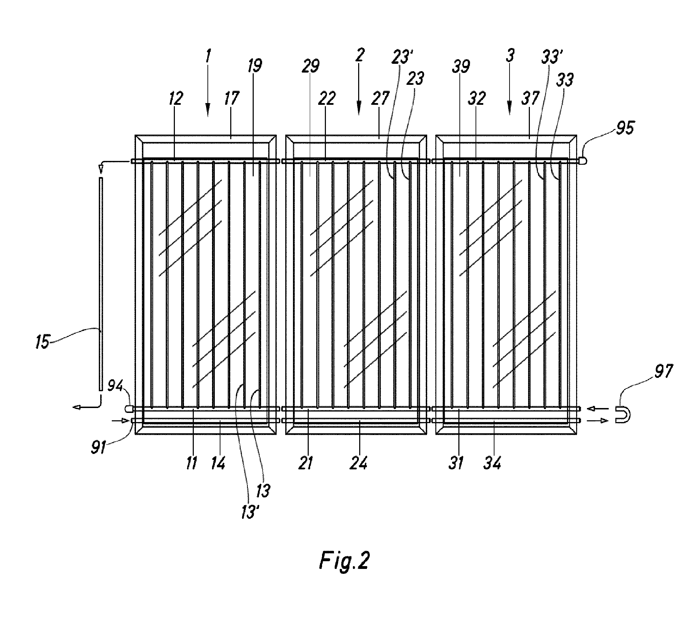

Fig. 2 shows diagrammatically an embodiment of an installation with three modular solar panels -1-, -2-, -3-, which are generally parallelepiped shaped. In this case the casings or frames -17-, -27-, -37- of each of the solar panels have also been shown. The caps used -94-, -95-and the double elbow -97- which cause the heat transfer fluid to change direction have also been shown. For reasons of clarity, the connection accessories between the corresponding outlets/inlets of the first -11-, -21-, -31- and second -12-, -22-, -32- collector pipes and between the recirculation pipes -14-, -24-, -34- of the respective solar panels -1-, -2-, -3- have not been shown. The return pipe -15- of the now heated transfer fluid has also been shown. As can be seen in Fig. 2, in this particular case, all the pipes shown are in the area where the solar panel is exposed to the sun. It would also be possible, for example, to shield the recirculation pipe from being struck directly by the rays of the sun, including by keeping the recirculation pipe inside the same space as the collecting surface and the rest of the circuit.

In the arrangement shown, the heat transfer fluid enters through the inlet -91-, flows through the recirculation pipes -14-, -24-, -34- while becoming hot, passes through the double elbow -97-and flows down the various paths formed by the first collector pipes -31-, -21-, -11-, the second collector pipes -32-, -22-, -12-and the parallel collector pipes -33-, -33'-, -23-, -23'-, -13-, -13'-which interconnect them, emerging through the pipe -15-which is connected to the collector pipe -12- by an elbow, for example.

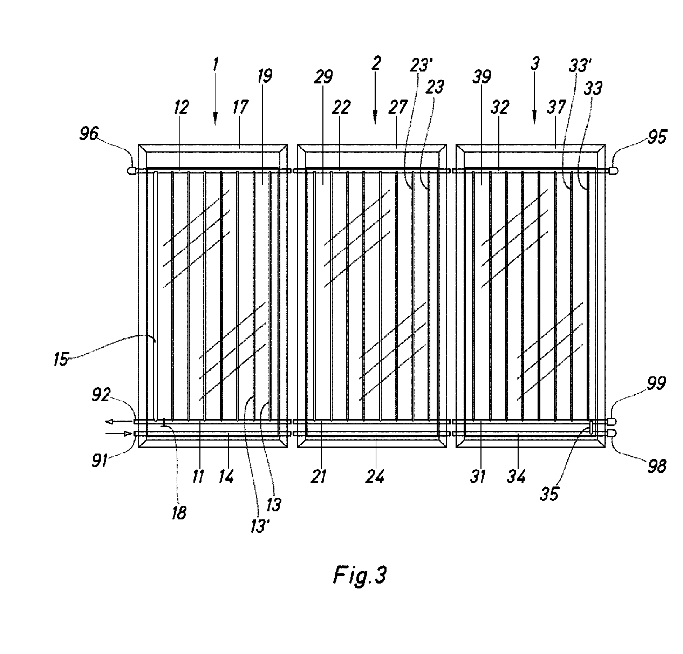

Fig. 3 shows an improved embodiment compared to the one in Fig. 2 in which three different types of solar panel have been used, which allows the number of accessories and the travel of the hydraulic circuit outside the solar panels to be minimised as much as possible. In the figure, identical or similar elements to those in Fig. 2 are shown with identical reference numerals.

The first type of solar panel corresponds to the solar panel -1- farthest to the left. In this type, a stopper -18- for the first collector pipe -11- has been arranged between the first parallel pipe-15- (which connects the first-11-and the second -12-collector pipes) and the next parallel pipe. This first parallel pipe-15- preferably has the same diameter as the collector pipes -11-, -12-(typically the parallel pipes -13-, -13'-have a smaller diameter). Only the outlet of the second collector pipe -12- is plugged by a cap -96-.

In the figure, the caps -95-, -96-, -98-, -99- have been shown as external, but they can also be produced inside the solar panel and even inside the collector pipe. The second type corresponds to the intermediate solar panel -2- and is similar to that in Fig. 1 and 2. The third type corresponds to the most distant solar panel -3-and has inside it a direct internal connection -35- between the recirculation pipe -34-and the first collector pipe -31-, the remaining elements being similar to those shown in the previous examples.

In the arrangement shown in Fig. 3, the heat transfer fluid enters through the inlet -91- of the first solar panel -1-, flows firstly through the recirculation pipes -14-, -24-, -34- and the direct connection-35-and then through the first collector pipes -31-, -21-, -11- to the stopper-18-, the parallel pipes-33-, -33'-, -23-, -23'-, -13-, -13'- and the second collector pipes -32-, -22-, -12- and finally passes through the first parallel pipe -15- of the first solar panel to the outlet -92- of the first solar panel -1-. This outlet corresponds to the outlet of the first collector pipe-11-since the stopper -18- obstructs the direct exit to the solar panels 2 and 3.

Configurations can be produced with a larger number of solar panels by mounting more solar panels like the central solar panel -2- in the intermediate position between the first solar panel -1- and the last solar panel -3-.

In addition, it is also possible to produce a configuration of two solar panels by eliminating the central solar panel -2- from the arrangement in Fig. 2 or Fig. 3 and directly interconnecting the first solar panel -1- and the last solar panel -3-.

In Fig. 2 and 3 the solar panels are mounted in parallel, that is to say, the inlet and outlet solar panels are interconnected. It is also possible to connect them in series forcing the fluid to flow through the entire circuit of each solar panel before entering the next one.

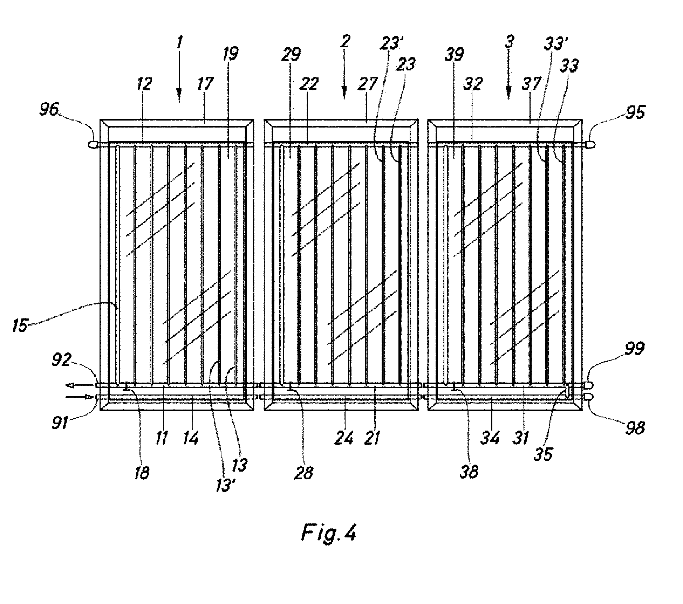

Fig. 4 shows an arrangement with three solar panels connected in series. As can clearly be seen, the type of the solar panels -1- and -2- coincides with the type of solar panel -1- in the arrangement in Fig. 3, and the solar panel -3- coincides with the type of solar panel -3-in Fig. 3 with a stopper -38- added to the first collector pipe -31-. Elements that are the same or similar to those in the previous figures have been identified with identical reference numerals, and they will therefore not be described in detail. In the embodiment in Fig. 4, all the solar panels -1-, -2-, -3-have the corresponding stopper -18-, -28-, -38- of the first collector pipe -11-, -21-, -31-, whereas the second collector pipes -12-, -22-, -32-, unlike the earlier embodiments, are not interconnected.

The solar panel -3- in Fig. 4 could also make possible a totally incorporated configuration for mounting installations with a single collector.

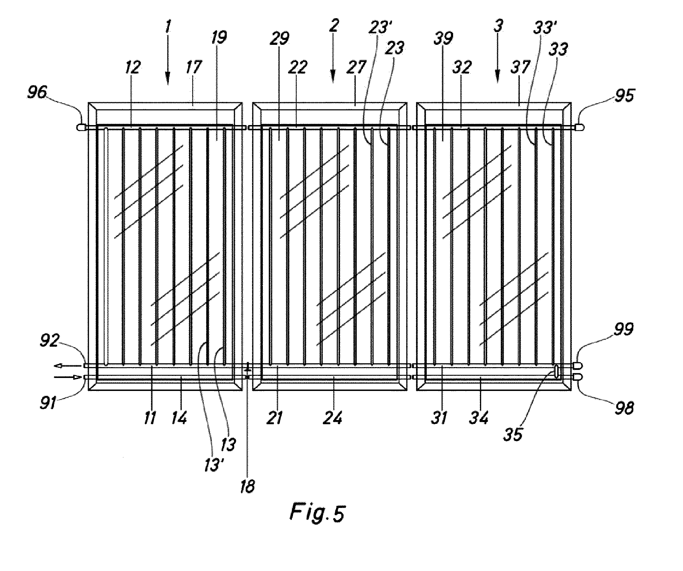

Fig. 5 shows an alternative form of Fig. 3 in that the stopper -18- is produced at the interface between two solar panels -1-, -2-. The need for a different manufacturing method for the first solar panel -1- is thereby avoided.

As will be understood, numerous alternative forms of the examples shown are possible without departing from the spirit and objects sought by the invention. For example, the geometric shape of the solar panels could change, or the arrangement between the collecting surface and the different components of the circuit.

Although the invention has been described in relation to preferred embodiments, these should not be considered to be limiting to the invention, which will be defined by the widest interpretation of the following claims.

## Claims

1. Solar panel, of the type that has a main body consisting of a perimeter frame which defines an internal volume in which a collecting surface is situated adjacent to a heat transfer fluid circuit in an area exposed to sunlight, said circuit comprising at least one inlet of the solar panel and one outlet of the solar panel for the heat transfer fluid, **characterised in that** the solar panel comprises an inlet and an outlet in its internal casing for receiving a recirculation pipe for the heat transfer fluid.

2. Solar panel according to claim 1, **characterised in that** it further comprises a recirculation pipe that also has an inlet and an outlet for the heat transfer fluid from the outside.

3. Solar panel according to claim 2, **characterised in that** the heat transfer fluid pipe is arranged adjacent to the collecting surface.

4. Solar panel according to either claim 2 or claim 3, **characterised in that** said heat transfer fluid circuit and recirculation pipe are arranged totally or partly connected to the collecting surface.

5. Solar panel according to any one of claims 1 to 4, **characterised in that** said circuit consists of a first collector pipe and a second collector pipe which are parallel and a pipe or series of pipes that both connect the first and second collector pipes, the first collector pipe having at least said inlet for the heat transfer fluid to the circuit and the second pipe having said outlet for the heat transfer fluid to the circuit.

6. Solar panel according to claim 5, **characterised in that** both the first pipe and the second pipe each have both an inlet and an outlet for the heat transfer fluid from the outside.

7. Solar panel according to any one of claims 2 to 6, **characterised in that** there is a direct fluid connection between the first collector pipe and the recirculation pipe.

8. Solar panel according to claim 6, **characterised in that** the first and/or second collector pipe has at least one stopper.

9. Installation, **characterised in that** it comprises at least two solar panels according to any one of claims 1 to 8, the solar collectors of said two panels being interconnected, and the recirculation pipes of said two panels being interconnected.
